(19) Europäisches Patentamt
European Patent Office
Office européen des brevets

(11) **EP 1 619 955 B1**

(12) **EUROPEAN PATENT SPECIFICATION**

(45) Date of publication and mention
of the grant of the patent:
**29.07.2009 Bulletin 2009/31**

(51) Int Cl.:
*A21D 10/02* (2006.01)   *A21D 8/02* (2006.01)
*A21D 2/08* (2006.01)   *A23L 1/00* (2006.01)
*A21D 13/08* (2006.01)

(21) Application number: **04759816.4**

(22) Date of filing: **09.04.2004**

(86) International application number:
**PCT/US2004/010919**

(87) International publication number:
**WO 2004/093551 (04.11.2004 Gazette 2004/45)**

(54) **DOUGH MADE WITH ENCAPSULATED SODA**

MIT VERKAPSELTER SODA HERGESTELLTER TEIG

PATE REALISEE AVEC DU BICARBONATE DE SOUDE ENROBE

(84) Designated Contracting States:
**AT BE BG CH CY CZ DE DK EE ES FI FR GB GR
HU IE IT LI LU MC NL PL PT RO SE SI SK TR**

(30) Priority: **17.04.2003  US 417608**

(43) Date of publication of application:
**01.02.2006  Bulletin 2006/05**

(73) Proprietor: **GENERAL MILLS MARKETING, INC.
Minneapolis, MN 55440 (US)**

(72) Inventor: **DOMINGUES, David, J.
Plymouth, MN 55441 (US)**

(74) Representative: **Vossius & Partner
Siebertstraße 4
81675 München (DE)**

(56) References cited:
**WO-A-00/78152         US-A- 4 022 917
US-A- 5 089 278        US-A1- 2002 001 655
US-A1- 2003 049 358    US-B1- 6 261 613**

Remarks:
The file contains technical information submitted after
the application was filed and not included in this
specification

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

Printed by Jouve, 75001 PARIS (FR)

**Description**

The invention relates to chemically leavened dough compositions (i.e., doughs that leaven during baking by action of chemical leavening agents), chemically leavened dough products, and methods for preparing the same.

Chemical leavening agents in dough products are convenient and effective substances for leavening, as an alternative to yeast. Yeast as a leavening agent requires a time-consuming proofing step during which the yeast metabolically produces a gas that leavens the dough composition. Because yeasts are temperature sensitive, they can become inactive at oven temperatures. Yeast leavened dough are normally proofed prior to baking, in what is generally considered a relatively time-consuming proofing step.

Chemical leavening systems can eliminate the need for the time-consuming pre-bake, metabolic proofing step required by yeast-leavened products, and chemically leavened dough products can often be placed directly from refrigerated or frozen storage into an oven without the time consuming step of allowing yeast to leaven the dough.

Chemical leavening systems, as they are often included in refrigerator stable dough compositions, include generally two chemical leavening agents, a basic agent and an acidic agent. These react during baking to produce a gas that leavens and expands (or "proofs") the dough.

Prior to baking, e.g., during refrigerated storage, chemical leavening systems can sometimes come into contact and react prematurely, at least to some degree, causing premature gas release and premature expansion of the dough composition. Such premature reaction can occur if the two chemical leavening components contact each other within the dough, generally at least in part because one or both of the components dissolves in the liquid component of the dough composition. An undesired result of this premature evolution of leavening gas, when packaged in a low-pressure, substantially air-tight package, can be that the package expands due to the evolved leavening gas.

Different attempts have been made to prevent undesired, premature contact between chemical leavening agents and the resulting release of leavening gas and expansion of doughs and packaging, One technique is to use chemical leavening agents that have low solubility at refrigerated storage temperatures - this prevents the agent from dissolving and being able to react. Another technique is to encapsulate a chemical leavening agent with a material that acts as a barrier between the agent and the dough composition, also preventing reaction.

Neither of these methods will entirely and completely prevent premature reaction of the chemical leavening agents, e.g., reaction during refrigerated storage. Agents that are of low solubility still dissolve to at least some small degree in a dough composition and become available in a form that may react. As for encapsulated particles, e.g., encapsulated basic particles, incomplete or imperfect encapsulation, cracking of the encapsulated coating, or damage to the encapsulated particles that occurs during preparation of a dough composition, can expose the particles to the dough and allow premature contact and reaction between the chemical leavening agents.

US 2003/0049358 discloses dough compositions and methods of preparing dough compositions, raw and baked, including preferred methods and compositions wherein chemical leavening agents are separated by a degradable barrier material to control their reaction untill a time during baking, wherein the chemical leavening agents at least partially leaven the dough composition during baking.

There is a continuing need for new refrigerated dough compositions and chemical leavening systems for such dough compositions, particularly chemical leavening agents that allow baking of the dough composition to a baked dough product that has normal flavor, taste, and color of a traditional dough product.

The invention results from the study of dough compositions containing encapsulated basic chemical leavening agent and slightly soluble non-encapsulated acidic chemical leavening agent. Prior to the present invention, it was thought to be desirable to make chemical leavening systems as stable as possible by using basic chemical leavening agent of a high degree of encapsulation, including a high percentage of coverage of encapsulated particulates by barrier material, minimized damage to the particles, and high encapsulant (barrier material) durability and stability. A well encapsulated and stable basic chemical leavening agent was thought to best prevent exposing the basic chemical leavening agent to the dough composition, thereby preventing premature leavening of the dough product.

It has now been unexpectedly found, however, that if encapsulation of basic chemical leavening agent particulates is too complete and durable, when used in combination with a slightly soluble non-encapsulated acidic chemical leavening agent, the surface of a dough composition does not brown well during baking.

Upon investigation of this non-browning phenomena, it has been discovered that inhibition of browning results from a reduced pH at the dough surface. This reduction in pH has been discovered to occur due to the use of encapsulated basic chemical leavening agent having a high degree of encapsulation, in combination with non-encapsulated acidic agent that is slightly soluble, not perfectly insoluble, at refrigerated storage temperatures. A reduced pH occurs in the dough because some amount of non-encapsulated acidic chemical leavening agent dissolves in the dough and reduces dough pH during refrigerated storage and throughout baking. A similar amount of basic agent, if available, would neutralize the dissolved acidic agent and maintain a substantially neutral pH. But, the use of encapsulated basic chemical leavening agent can prevent basic agent from being available to react with the dissolved acidic agent The lack of basic chemical leavening agent means that dissolved acidic chemical leavening agent will not be neutralized by basic agent and will consequently reduce the dough pH. Thus, during storage, pH of a dough composition becomes increasingly acidic.

Dough compositions brown during baking by a pH-dependent reaction known as Maillard browning. Maillard browning is a chemical reaction that occurs between reducing sugars and amino acids that come from peptides or proteins of the dough. The sugar and amino acid react, beginning at early stages of a baking cycle, to ultimately form brown pigments. The dough surface must be at a proper pH during the baking cycle for this reaction to proceed. Maillard browning best occurs at a slightly acidic to neutral pH, e.g., from 6 to 8, preferably between 6.5 and 7.5. Preferably, to produce the best browning results, the pH should be in this proper browning range at the beginning of a baking cycle and remain in the proper range for a substantial portion of the baking cycle, preferably substantially the entire baking cycle, so that browning reactions occur early in the cycle and continue through the entire baking cycle. In certain embodiments of dough compositions, it has been observed that browning may not occur if the dough pH is acidic at the beginning of the baking cycle; i.e., pH at a dough surface must be close to neutral at the beginning of the bake cycle for adequate browning to occur.

It is now understood that chemically leavened dough compositions may brown normally if the surface pH at the beginning of the baking cycle is in the proper range of neutral to slightly acidic. This is now understood to occur because, while some non-encapsulated acidic chemical leavening agent dissolves in the dough composition to reduce pH of the dough composition, some amount of encapsulated basic chemical leavening may similarly become available to neutralize the acid and produce the proper pH for browning.

Other chemically leavened dough compositions that contain slightly soluble non-encapsulated acidic chemical leavening agents in combination with encapsulated basic chemical leavening agents may not exhibit good browning upon baking, if the basic agent is too well encapsulated and protected from the dough composition and does not enter the dough composition to neutralize dissolved acid. This can cause a reduction in pH to a level that is below the range that allows Maillard browning. In other words, encapsulated basic chemical leavening agents that have a high degree of encapsulation may not allow a sufficient amount of basic agent to be present in the dough composition, at a surface, during certain stages of a baking cycle, to react with dissolved acidic chemical leavening agent and produce surface browning. The pH of the dough surface is reduced to an acidic range, e.g., during storage, and possibly carrying over to early and maybe later stages of a baking cycle, and adequate or normal Maillard browning does not occur. Thus, while encapsulated basic chemical leavening agents beneficially allow for high stability of a dough composition - e.g., preventing gas evolution - they can have the unintended consequence of allowing dough pH to fall, which can hinder and prevent normal browning at the surface of a dough.

According to the invention, a chemically leavened dough composition that leavens during baking by action of chemical leavining agents can be prepared using a chemical leavening system, to produce a dough composition that is stable during refrigerated storage (e.g., exhibits relatively low premature reaction of the chemical leavening agents and therefore relatively low outgassing and reduced package bulging), but that also browns normally during baking.

Dough compositions of the invention include a dough composition (sometimes referred to herein as "interior" dough or "stable" dough) that is relatively stable during refrigerated storage. This interior dough includes encapsulated basic chemical leavening agent that prevents the basic agent from becoming prematurely dissolved in the dough, e.g., has high degree of encapsulation. This dough includes non-encapsulated acidic chemical agent that is preferably only slightly soluble, but that still dissolves to some degree during refrigerated storage and reduces pH of the dough composition. Of the encapsulated basic agent only a small amount enters the dough and only a small amount is available to react with and neutralize dissolved acidic agent A result of the encapsulated basic agent is a reduced amount of premature reaction between the basic and acidic chemical leavening agents, which leads to low carbon dioxide evolution and high stability during refrigerated storage. Another result is reduced pH that can prevent normal browning of such a dough composition during baking if that composition were located at an exterior surface of a baked dough composition.

Exemplary dough compositions referred to herein as the interior dough can evolve less than 40 or 50 cubic centimeters (cc) of carbon dioxide per 125 grams of dough over an 8 or 10 week period of time while stored at 7.2°C (45 degrees Fahrenheit), more preferably less than 25 or 20 cc of carbon dioxide per 125 grams over 8 or 10 weeks at 7.2°C (45 degrees F).

The invention relates to providing on the described type of "interior" dough composition, which would not otherwise brown normally during baking, an exterior a dough surface that is formulated to brown normally during baking (e.g., a "browning" surface). Specifically, because the interior dough would not normally brown (if placed at an exterior surface) due in part to the use of well encapsulated basic chemical leavening agent that provides good stability, the invention relates to providing an exterior surface on the interior dough that will provide browning, while still taking advantage of the stable interior dough preferably having relatively low carbon dioxide evolution.

In general, a browning surface can be a dough surface that has pH properties during baking to allow normal Maillard browning. In some embodiments of the invention, the browning surface of a dough can be formulated differently than the interior dough composition, so the surface will acquire and maintain a pH during baking that will result in normal Maillard browning. In certain of these embodiments, surface pH can be controlled by adding pH-affecting agents at the surface, such as a basic material, e.g., basic chemical leavening agent or another basic agent, such as an encapsulated basic chemical leavening agent In particular embodiments, at a surface of the dough can be provided encapsulated basic agent that allows an amount of the encapsulated basic agent to neutralize dissolved acidic agent and provide a surface pH that causes browning during baking, e.g., encapsulated basic agent disposed at the surface is not as well encapsulated as encapsulated basic agent of the interior. During storage or baking, a sufficient amount of the encapsulated basic agent at the surface becomes exposed, allowing that basic chemical leavening agent to neutralize dissolved acidic agent. The exterior surface acquires a pH, from 6.5 to 7.5, that permits the surface to brown during baking.

In one embodiment of the invention, the interior dough portion has non-encapsulated acidic chemical leavening agent and encapsulated basic chemical leavening agent, preferably basic chemical leavening agent that has a high degree of encapsulation and would not result in normal browning of dough surface during baking. The exterior surface of the dough is separately formulated to brown normally during baking by having a pH during baking that results in normal Maillard browning. The surface pH can be controlled by placing a basic agent such as basic chemical leavening agent at the surface which, prior to or during baking, is of a composition and amount to maintain a proper browning pH by reacting with dissolved acidic agent. The basic agent can be topically applied, by any method. The basic agent can be non-encapsulated or encapsulated, such as an encapsulated basic chemical leavening agent that is considered to not have a high degree of encapsulation, e.g., that has a lower degree of encapsulation than the encapsulated basic chemical leavening agent used in the interior dough.

In other embodiments, a non-browning interior dough composition can be wrapped by or enveloped in a different exterior dough portion that will brown normally during baking, e.g., a veneer of a dough composition formulated to brown normally. The exterior portion can be any dough formulation that browns normally during baking, such as a chemically leavened dough containing non-encapsulated acidic agent and encapsulated basic agent.

The dough composition is refrigerator stable and can be packaged in low-pressure packaging. The dough composition can be relatively stable with respect to the chemical leavening agents, so that the chemical leavening agents do not prematurely react to produce leavening gas that can substantially expand air-tight packaging. Stability can be measured by monitoring the volume of the dough composition and the amount of expansion of the dough composition that occurs prior to baking, and by monitoring the amount of leavening gas (e.g., carbon dioxide) produced by the dough composition prior to baking. Stability can be evident as a low amount of expansion during various stages of processing, packaging, and storage, or by a desirably low volume of carbon dioxide evolution. Preferred dough compositions of the invention can be stable as packaged preferably without the use of pressurized packaging, under refrigerated conditions, for up to or exceeding 12 weeks at about 7.2°C (45°F). Exemplary dough compositions of the invention, including the interior portion and browning surface, or the interior portion wrapped by a browning exterior portion, can evolve less than 40 or 50 cubic centimeters (cc) of carbon dioxide per 125 grams of dough over an 8 or 10 week period of time while stored at 7.2°C (45 degrees Fahrenheit), more preferably less than 25 or 20 cc of carbon dioxide per 125 grams over 8 or 10 weeks at 7.2°C (45 degrees F). In terms of expansion of a packaged dough product (e.g., a 200 cubic centimeter volume package containing 125 cc dough and 75 cc headspace), with volume gain being a direct result of carbon dioxide outgassing, preferred packaged dough products prepared according to the invention may experience less than 25 percent, e.g., less than 15 percent, and most preferably less than 10 percent volume increase of the 200 cc package over a period of 5 weeks, 10 weeks, or 12 weeks at 7.2°C (45 degrees Fahrenheit).

Advantageously, preferred methods and compositions of the invention can avoid the need for pressurized packaging of dough compositions or packaging that includes a pressure (gas) relief valve. For example, instead of pressurized packaging, which can be necessary to contain out-gassed carbon dioxide and expansion of dough compositions that occur with premature reaction of chemical leavening agents, non-pressurized packaging can be used according to the invention, because of the relatively low extent of outgassing and volume expansion. Non-pressurized refer to package products having an internal pressure of about 1.0 bar (1 atmosphere), e.g., 0.9 to 1.27 bar (0.9 to 1.25 atm), preferably 0.9 to 1.1 bar (0.9 to 1.1 atm). A gas relief valve is not required to release carbon dioxide and avoid pressure build, and is preferably not present In a related advantage, the use of non-pressurized packaging can make it easier to package fewer portions, e.g., of biscuits, per container, which can add an element of portion control to preferred packaged dough compositions of the invention. For example, a non-pressurized container may include sub-divided portions of 1, 2, or 3, etc., dough portions packaged to be substantially air tight, but still not pressurized. More than one of those sub-divided portions can be included in a larger package, and each non-pressurized container in the larger package can be opened and used separately.

An aspect of the invention relates to refrigerator stable, unproofed chemically leavened dough compositions according to claim 1.

Another aspect of the invention relates to a refrigerator stable, unproofed chemically leavened dough composition according to claim 11.

Yet another aspect of the invention relates to a method of preparing a refrigerator stable, unproofed, chemically leavened dough composition according to claim 14.

"Refrigeration-stable," as used herein, means that a dough composition undergoes insufficient leavening during refrigerated storage to be a useful commercial or consumer dough product, e.g., there is not an excessive amount of leavening gas (e.g., carbon dioxide) production during storage (the raw specific volume (RSV) remains at an acceptable level, such as from 0.9 to 1.6 cc/gram), or the amount of leavening gas released from the dough composition does not exceed 0.79 cc/gram dough over a 12 week period of storage at about 7.2°C (45°F).

The term "unproofed" refers to a dough composition that has not been processed to include any step intended to cause proofing or intentional leavening of a dough composition. For example, a dough composition may not have been subjected to a specific holding stage for causing the volume of the dough to increase by 10% or more. The raw specific volume (RSV) of an unproofed dough composition can typically be in the range from about 0.75 to about 1.6 cubic centimeters per gram (cc/g).

The term "early stage of baking" refers to a stage of a baking cycle that is prior to 10 minutes from the start, e.g., prior to 5 or 2 minutes, after a baking cycle starts at a temperature between about 148.9°C-190.5°C (300°F-375°F). Most often, the oven is allowed to preheat to the desired baking temperature of 176.7-190.5°C (350-375°F) prior to placing the product in the oven.

Figure 1 shows Minolta L values of control biscuits versus biscuits with a different basic agent in a veneer.

Figure 2 shows Minolta L values of control biscuits versus biscuits made with topically coated encapsulated basic agent

Chemically leavened dough compositions can be prepared from ingredients generally known in the dough and bread-making arts, typically including flour, a liquid component such as oil or water, a chemical leavening system, and optionally additional ingredients such as shortening, salt, sweeteners, dairy products, egg products, processing aids, emulsifiers, particulates, dough conditioners, yeast as a flavorant, flavorings, and the like. Preferred compositions do not include yeast as a leavening agent, and the dough is leavened entirely based on the action of the chemical leavening agents.

The invention includes a chemically leavened dough composition that contains a non-encapsulated acidic chemical leavening agent. Acidic chemical leavening agents are generally knows in the dough and bread-making arts, and include sodium aluminum phosphate (SALP), sodium acid pyrophosphate (SAPP), and monosodium phosphate; monocalcium phosphate monohydrate (MCP), anhydrous monocalcium phosphate (AMCP), dicalcium phosphate dihydrate (DCPD) as well as a variety of others. Commercially available acidic chemical leavening agents include those sold under the trade names: Levn-Lite® (SALP), Pan-O-Lite® (SALP+MCP), STABIL-9® (SALP+AMCP), PY-RAN® (AMCP), and HT® MCP (MCP). These and other examples of acidic chemical leavening agents useful in the compositions are described in Assignee's copending United States Patent Application Serial No. 09/945,204, filed August 31,2001, entitled "Chemically leavened Doughs and Related Methods," and in U.S. Patent No. 6,261,613.

Preferred non-encapsulated acidic agents are slightly soluble in an aqueous phase of a dough composition at processing and refrigeration temperatures. The acidic agent can react with the basic agent only after the acidic agent dissolves in the aqueous phase of a dough composition, so a low solubility helps to prevent reaction of the agents during processing and storage. A higher solubility of the acidic agent is desired at baking temperatures, to allow dissolution and reaction with the basic agent to leaven the dough during baking. Especially preferred acidic chemical leavening agents exhibit slight solubility at processing or refrigerated storage temperatures (e.g. from about 4.4 (40) to about 12.9°C (55 degrees Fahrenheit)) and therefore remain substantially solid during refrigerated storage, up until baking. At higher temperatures, preferred acidic agents become substantially soluble, e.g., at least 90 percent dissolved.

Particularly useful acidic chemical leavening agents include SALP and SAPP and other acidic agents that exhibit solubility behavior similar to SALP and SAPP (most preferably SALP). SALP exhibits low solubility at comparatively low temperature ranges, such as below about 35-40°C; however, it has an adequate solubility at higher (e.g., baking) temperatures.

When acidic chemical leavening agent dissolves in a dough, even if only slightly, the acid affects the pH of the dough composition. Non-encapsulated acidic chemical leavening agent, even those that are only slightly soluble, dissolve somewhat in the aqueous component of a dough composition, e.g., during refrigerated storage. This amount of acid, if not neutralized by a base, reduces the pH of the dough composition. If the pH is reduced too far, i.e., if a sufficient amount of acidic chemical leavening agent dissolves and is not neutralized, the pH of the dough composition surface can be reduced to a level that does not allow the dough composition surface to brown normally during baking according to the Maillard browning reaction.

The amount of acidic chemical leavening agent included in a dough composition for chemical leavening can be an amount sufficient to neutralize an amount of basic chemical leavening agent during baking, e.g., an amount that is stoichiometric to the amount of basic chemical leavening agent, with the exact amount being dependent on the particular acidic chemical leavening agent that is chosen. A typical amount of acidic agent such as SALP may be in the range from about 0.25 to about 2 parts by weight per 100 parts dough composition, with ranges from about 0.25 to about 1.5 parts by weight per 100 parts dough composition being preferred.

The dough composition also includes encapsulated basic chemical leavening agent. Discussions of encapsulated basic agents are included in Assignee's copending United States Patent Application Serial No. 09/945,204, filed August 31, 2001, entitled "Chemically leavened Doughs and Related Methods," and in U.S. Patent No. 6,261,613.

The terms "encapsulated basic chemical leavening agent," "encapsulated basic agent," or simply "encapsulated particles," refer to particles that include solid basic chemical leavening agent particulates covered in part, e.g., substantially completely, by barrier material. Encapsulated particles are known in the baking arts, and include encapsulated particles sometimes referred to as "enrobed" particles, as well as those sometimes referred to as "agglomerated" particles. The barrier material forms a coating or shell around a single or multiple particulates of solid basic chemical leavening agent, separating the chemical leavening agent from a bulk dough composition. "Enrobed" particles generally include a single particulate of chemical leavening agent covered or coated by barrier material, and "agglomerate" particles generally include 2, 3, or more particulates of chemical leavening agent contained in a mass of barrier material.

Encapsulating the basic chemical leavening agent provides separation between the basic agent and the bulk of the dough composition to inhibit or prevent reaction of the basic and acidic agents until a desired time or condition of processing or use, at which condition the barrier material or encapsulated material degrades and exposes the base to the dough composition. Preferably, during preparation of the dough composition, packaging, and storage of the dough (normally at a refrigerated temperature), the barrier material maintains substantial separation between the base and acid components and prevents their reaction, preferably to the extent that the density of the dough does not significantly change to cause a change in appearance or handling properties.

Useful basic chemical leavening agents are generally known in the dough and baking arts, and include soda, i.e., sodium bicarbonate ($NaHCO_3$), potassium bicarbonate ($KHCO_3$), ammonium bicarbonate ($NH_4HCO_3$), etc. These and similar types of basic chemical leavening agents are generally soluble in an aqueous phase of a dough composition at processing or refrigerated storage temperature.

The invention recognizes that there exist different degrees of encapsulation of encapsulated basic chemical leavening agents, and that when used in combination with a non-encapsulated acidic chemical leavening agent, the degree of encapsulation of an encapsulated basic agent can substantially affect stability, pH, and browning properties of a dough composition. The degree of encapsulation of encapsulated basic particles can be affected by factors such as the composition of the basic agent; the size of basic agent particulates; the composition and relative amount of barrier material; the type, quality, and amount of the barrier material coating; etc. In general, encapsulated basic agents referred to herein as having a high degree of encapsulation, release insufficient basic agent during baking to allow normal browning of the dough surface, when used in a formulation with low solubility non-encapsulated basic agent such as SALP. Normal browning means a brown coloration, texture, and flavor that is typical and expected of a commercial baked dough product such as a bread, croissant, or roll, or other such product. For example, when using the Minolta L browning test, known in the breadmaking arts, "normal" browning can mean a brown dough surface that produces a Minolta L reading of 71 or below.

The degree of encapsulation of a basic chemical leavening agent can be more quantitatively discussed in various terms. The degree of encapsulation refers to how well particulates of basic agent are covered by or enclosed by a barrier material, and the effectiveness with which the barrier material coating separates the basic agent from a bulk dough composition. Features of an encapsulated chemical leavening agent that provide a high degree of encapsulation include a high percentage of coverage of basic agent particulates by a barrier material, a low amount of cracking of the barrier material, and a low amount of damage to encapsulated particles during processing. Conversely, a low degree of encapsulation can exist if there is a low percentage of coverage of basic agent particulates by a barrier material, a high amount of cracks in the barrier material, or a large degree of damage to the encapsulated particles during processing. Any of these would expose particulates of the basic agent to a dough composition where the basic agent would react with and neutralize dissolved acidic agent.

One method that may be useful to quantify degree of encapsulation of an encapsulated basic chemical leavening agent is a leaching test, e.g., as described below. Encapsulated basic particles having a high degree of encapsulation can have a release of less than 10%, especially a release in the range from 2% to 6% (based on the described test). Encapsulated particles having a low degree of encapsulation can have a release of greater than 50%, based on the described test

Encapsulated particles containing basic chemical leavening agent and barrier material can be prepared by methods known in the baking and encapsulation arts. An example of a method for producing enrobed particles is the use of a fluidized bed. According to this methods, core particulates and barrier material are concurrently introduced into a fluidized bed. As the two materials are present in the fluidized bed, the barrier material becomes coated on the surface of the core particulate. The longer the particulate is present in the fluidized bed, the thicker the coating of barrier material becomes. Typical particles can include 1, 2, or 3 particulates per encapsulated particle.

To prepare encapsulated particles containing basic chemical leavening with a high degree of encapsulation, parameters of encapsulation can be controlled to affect amount of coverage (e.g., the amount and thickness of the barrier material). Other contributing factors include the type of barrier material used, and the amount of subsequent damage to the encapsulated particles. Mechanical shear or other forces can damage encapsulated particles and cause exposure of the basic particulates through the barrier material layer.

The barrier material can be any material that can separate a basic agent of a chemical leavening system in a dough composition, and that can be degraded, preferably at a baking temperature, to eliminate the separation and allow the basic agent to contact an acidic agent and react within the dough composition. The process of breaking down the barrier material can preferably be controlled in a predictable, controllable manner, such as by raising the temperature of the dough above the melting temperature of the barrier material, to cause the barrier material to melt and allow basic agent to be exposed to the dough composition.

Preferred barrier material may be chosen to encourage release of enrobed or coated particulates of basic agent into a dough composition, upon degradation of the barrier material. For example, it can be preferred that the barrier material melts at a baking temperature into a liquid form that can be separated from basic agent particulates to facilitate introduction of the particulates into the bulk dough composition. This means that when the barrier material melts, the barrier material and the particulates have a tendency to separate instead of a tendency to remain in the form of a melted barrier material coating surrounding a particulate or particulates of basic agent in a dough composition. Separation of the basic agent particulates from the barrier material is important to disperse the basic agent throughout the dough composition, The extent to which a melted barrier material is predisposed toward separating from particulates of basic agent can depend on factors such as the surface tension of the melted barrier material, the ratio (mass or volume) of basic agent to melted barrier material, the solid fat index of a fat-type barrier material, and the melting point of the barrier material, all of which can be chosen to facilitate separation.

A preferred melting point for a barrier material can be a melting point that causes a barrier material to take the form of a stable, hydrophobic solid at dough preparation, packaging, and storage temperatures, and that causes the barrier material to break down (e.g., melt) during baking. If oven temperature during baking is generally about 148.9°C to 260°C (300 to 500°F), preferred melting points of barrier materials are generally lower, e.g., greater than 37.8°C (100°F), so that a melting point is something higher than refrigerated storage or room temperature, and is a temperature that the dough composition experiences during baking, but is not necessarily the temperature of the set point of the oven during baking. Particularly preferred melting points can be within the temperature range experienced bey the dough composition during early stages of baking, such as from about 37.8°C (100°F) to about 93.3°C (200°F). While other temperatures can also be found to be useful, melting temperature can preferably be chosen to be below the starch gelatinization temperature, typically from about 37.8 (100) to about 65.6°C (150°F), with exemplary melting temperatures of a barrier material being in the range from about at least 37.8°C (100°F) up to about 60°C (140°F), preferably at least about 43.3°C (110°F) up to about 54.4°C (130°F). Thus, a barrier material can be sufficiently stable, for example, at processing and refrigerated storage temperatures to provide unreacted, separated, basic agent to be available during baking, especially a barrier material used in a stable, interior dough portion. Furthermore, a barrier material can preferably be capable of remaining substantially physically intact upon processing, meaning that it does not substantially break down physically during preparation of the dough composition, especially when used in an interior dough portion.

Specific examples of barrier materials can include materials that are hydrophobic and that exhibit desired properties such as a desired mechanical properties, surface tension, solid fat index, and/or a desired melting point. With respect to mechanical properties, preferred barrier materials can be sufficiently strong, durable, and flexible to withstand processing of the dough composition without being fractured, e.g., broken or otherwise affected to expose active ingredient particulates, e.g., the barrier material is preferably not overly brittle. At the same time, a barrier material may be miscible with the dough composition upon melting, although does not need to be.

Exemplary types of barrier materials include hydrophobic materials such as fats and emulsifiers. Specific examples include oils such as vegetable oils, including soybean oil, cotton oil, palm oil, palm kernel oil, canola oil, or any other oils, especially high lauric acid triglyceride-containing oils, any of which may be used alone or in mixtures with each other or with other barrier materials. Synthetic analogs of any of these may also be useful. Synthetic analogs include synthetic materials with fatty acid compositions like the vegetable oils above, or other useful oils, including, preferably, a positional geometry of fatty acids esterified on a tri-glyceride.

Preferred fat-type barrier material can be those that exhibit a high solid fat index ("SFI"), which is the ratio of solid fat to liquid fat in a barrier material at a certain temperature. A barrier material having a high solid fat index will generally better protect a coated particle because the barrier is solid at a higher temperature, and is more stable during mixing and processing due to greater strength and integrity. Of course the melt point is still preferably as described elsewhere in this description. Exemplary high solid fat index values can be at least about 50% at 23.9°C (75°F), preferably at least about 70% at 26.7°C (80°F). Fat-type barrier materials having such an SFI are commercially available, as will be understood by the skilled artisan. Examples include high lauric acid fats such as LauriCal (canola) from Cargill, Neutresca (fractionated palm kernel) from Aarhus, and Cebes (fractionated palm kernel) from Aarhus.

The amount of a basic chemical leavening agent to be used in a dough composition is preferably sufficient to react with the included acidic chemical leavening agent during baking to release a desired amount of gas for leavening, thereby causing a desired degree of expansion of the dough product As will be appreciated by the skilled artisan, the individual acidic and basic agents can be included in a dough composition in respective amounts that are useful to leaven the dough composition. The typical amount of a basic chemical leavening agent (not including the weight of barrier material) may be in the range from about 0.25 to about 2 parts by weight per 100 parts dough composition, with ranges from about 0.75 to about 1.5 parts by weight 100 parts dough composition being preferred.

The described combination of non-encapsulated, preferably slightly soluble, acidic agent, and encapsulated basic agent having a high degree of encapsulation, provide a dough composition for use as the "interior" dough, that has very good refrigerated storage stability. Exemplary dough compositions can evolve less than 60, 50, or 40 cubic centimeters (cc) of carbon dioxide per 125 grams of dough over an 8 or 10 week period of time while stored at 45 degrees Fahrenheit, more preferably less than 25 or 20 cc of carbon dioxide per 125 grams over 8 or 10 weeks at 7.2°C (45 degrees F).

In addition to high stability, however, such stable, chemically leavened dough compositions containing non-encapsulated acidic agent and encapsulated basic agent exhibit a tendency to not brown at their surface during baking. For example, an amount of non-encapsulated acidic agent may dissolve in the dough composition to reduce the pH of the dough composition to a level that will not allow Maillard browning, i.e, to a pH that is below 6.5 before baking. At the same time, an insufficient amount of basic agent is available to neutralize the dough to a pH that results in normal Maillard browning during baking.

Accordingly, the invention relates to compositions and methods that overcome the problem of a chemically leavened dough composition surface failing to brown normally, by providing a surface of or over the stable interior dough that exhibits normal browning during baking.

The invention contemplates a variety of different techniques that are effective for using a stable interior dough composition as described herein, which does not brown normally, while also achieving a dough surface pH that results in a useful degree of Maillard browning. In general, due to the presence of dissolved acidic agent, the surface pH of a described stable interior dough composition is too acidic to allow browning. According to one embodiment of the invention, a separate basic chemical leavening agent can be topically provided at the surface of the dough to neutralize dissolved acidic agent and maintain or adjust the pH to a level that allows browning during baking. For example, a basic material can be provided topically at only a surface of the dough composition, in an amount that will provide a pH during baking that will result in browning. The basic material may be a soda such as sodium bicarbonate, potassium bicarbonate, ammonium bicarbonate, etc., and may be encapsulated or non-encapsulated. If an encapsulated basic chemical leavening agent, the basic material can preferably not exhibit a high degree of encapsulation. Instead, an encapsulated basic chemical leavening agent provided at a surface of a dough to neutralize dissolved acidic agent and allow browning, should be encapsulated to a degree that allows basic agent to become exposed to the acid at an early stage of baking, to react with dissolved acidic agent, increase the pH at the surface, and allow browning at the dough surface during the baking cycle. For example, a pH at the surface can preferably be greater than 6 or 6.5, at the surface, within the first ten minutes of baking, e.g., within 5 minutes or within 2 minutes of the start of baking, most preferably greater than 6.5 at the start of baking.

Preferred encapsulated basic agents used at a dough surface to neutralize dissolved acidic agent to allow browning can be characterized as having less than a high degree of encapsulation, e.g., more than 10 percent release based on the leaching test (below), especially greater than 50 percent release based on the leaching test.

Encapsulated basic chemical leavening agent that exhibits less than a high degree of encapsulation are known in the baking and dough arts and can be prepared generally by methods described herein for preparing encapsulated basic chemical leavening agents. The process of making relatively less tightly encapsulated chemical leavening agents allows particulates to be imperfectly coated or allows more cracking of the barrier material, compared to the preparation of more highly encapsulated particles.

A basic agent may be provided on a surface of a dough composition by any of various useful methods, as will be appreciated by those of skill. Methods include direct dusting, spraying, tumbling, etc., or mixing an encapsulated or non-encapsulated basic agent with another ingredient such as a shortening and spraying or otherwise applying the resulting composition to the surface of the dough.

The amount of a basic material placed on a surface of a stable, interior dough to result in browning of the surface can be any amount useful to produce browning during baking. Functionally, the amount is sufficient to provide a surface pH that causes browning, i.e., from 6.5 to 7.5, e.g., as measured immediately before baking. One of skill will understand and be able to determine useful amounts of basic material to be applied to a dough surface based on factors such as the type and composition of basic agent, whether and how well a basic agent is encapsulated, and the type and composition of dough composition.

In another embodiment, a stable interior dough composition as described above can be included as an interior portion of a dough, and upon this interior portion can be placed an exterior dough portion that is different in composition from the interior portion, and that will brown during baking.

The exterior portion can be of any desired and useful composition, and preferably can be a dough composition similar in unbaked or baked composition, taste, texture, and physical properties, to the interior dough portion. The exterior portion can include a chemical leavening system that contains non-encapsulated acidic chemical leavening agent The exterior portion can include encapsulated or non-encapsulated basic agent, and can preferably include encapsulated basic agent that is not of a high degree of encapsulation, e.g., is of a low degree of encapsulation, to allow basic chemical leavening agent to be available to neutralize dissolved acid and allow browning of the dough surface during baking. Alternatively, the exterior dough composition can include encapsulated or non-encapsulated basic agent with no acidic chemical leavening agent

The amount of exterior portion used relative to the interior portion, can be any useful amount to provide a surface that browns during baking. The relative amounts of interior and exterior dough portions can be selected depending on the particular composition, e.g., chemical leavening system, of each, and as one feature the exterior portion can preferably be thick enough to exhibit a pH at baking that will allow browning, even after refrigerated storage for up to 8, 10, or 12 weeks.

A chemically leavened dough composition according to the invention can include other dough ingredients as known in the dough and baking arts, or as developed in the future to be useful with chemically leavened dough compositions.

The flour component can be any suitable flour or combination of flours, including glutenous and nonglutenous flours, and combinations thereof. The flour or flours can be whole grain flour, flour with the bran and/or germ removed, or combinations thereof. Typically, a dough composition can include between about 30% and about 70% by weight flour, e.g., from about 45% to about 60% by weight flour, such as from about 50 to 55 weight percent flour.

Examples of liquid components include water, milk, eggs, and oil, or any combination of these. Preferably, the liquid component includes water, e.g., in an amount in the range from about 15 to 35 weight percent, although amounts outside of this range may also be useful. Water may be added during processing in the form of ice, to control the dough temperature in-process; the amount of any such water used is included in the amount of liquid components. The amount of liquid components included in any particular dough composition can depend on a variety of factors including the desired moisture content of the dough composition. Typically, liquids can be present in a dough composition in an amount between about 15% by weight and about 35% by weight, e.g., between about 20% by weight and about 30% by weight.

The dough composition can optionally include egg or dairy products such as milk, buttermilk, or other milk products, in either dried or liquid forms. If used, dairy products can be included as up to about 25 percent by weight of the dough composition, e.g., between about 1 percent and about 10 percent of the dough composition.

The dough composition can optionally include fat ingredients such as oils and shortenings. Examples of suitable oils include soybean oil, corn oil, canola oil, sunflower oil, and other vegetable oils. Examples of suitable shortenings include animal fats and hydrogenated vegetable oils. If included, fat is typically used in an amount less than about 20 percent by weight, often less than 10 percent by weight of the dough composition.

The dough composition can optionally include one or more sweeteners, either natural or artificial, liquid or dry. Examples of suitable dry sweeteners include lactose, sucrose, fructose, dextrose, maltose, corresponding sugar alcohols, and mixtures thereof Examples of suitable liquid sweeteners include high fructose corn syrup, malt, and hydrolyzed corn syrup. Often, dough compositions include between about 2% by weight and about 15% by weight, e.g., from about 5% by weight to about 10% by weight sweetener.

The dough composition can further include additional flavorings, for example, salt, such as sodium chloride and/or potassium chloride; whey; malt; yeast extract; yeast (e.g., inactivated yeast); spices; vanilla; etc.; as is known in the dough product arts. The additional flavoring can typically be included in an amount in the range from about 0.1 percent to about 10 percent of the dough composition, e.g., from about 0.2 percent to about 5 percent of the dough composition.

As is known, dough compositions can also optionally include other additives, colorings, and processing aids such as emulsifiers, strengtheners (e.g., ascorbic acid), preservatives, and conditioners. Suitable emulsifiers include lecithin, mono- and diglycerides, polyglycerol esters, and the like, e.g., diacetylated tartaric esters of monoglyceride (DATEM) and sodium stearoyl-2-lactylate (SSL).

Conditioners, as are known in the dough products art, can be used to make the dough composition tougher, drier, and/or easier to manipulate. Examples of suitable conditioners can include azodicarbonamide, potassium sulfate, L-cysteine, sodium bisulfate, and the like. If used, azodicarbonamide is preferably not present in an amount more than 45 parts per million.

Dough compositions described herein, either a stable interior portion or an exterior portion for browning, can be prepared according to methods and steps that are known in the dough and dough product arts. These can include steps of mixing, folding, lapping, adding ingredients, forming, shaping, cutting, rolling, etc., which are steps well known in the dough and baking arts.

Preferred stable interior dough compositions as described can preferably (but not necessarily) be prepared by methods that prevent or avoid substantial or excessive damage to encapsulated basic chemical leavening agent particles. One method of incorporating and substantially uniformly distributing encapsulated basic chemical leavening agent into a dough composition is by using reduced amounts of shear, such as high speed or high shear mixing for a reduced amount of time, or by using low shear methods to reduce or prevent damage to encapsulated basic chemical leavening agent particles. The reduced shear prevents damage to encapsulated chemical leavening agent particles, maintains the protective barrier coating over chemical leavening agent particles, and prevents the coated chemical leavening agent from becoming prematurely exposed to the dough composition where it may react. Low shear methods of incorporating basic chemical leavening agent into a dough composition are described in Assignee's co-pending United States patent application serial number 10/224,886, entitled Methods of Incorporating Encapsulated Chemical Leavening Agent into Dough Ingredients, and Compositions So Prepared, filed August 21, 2002.

Chemical leavening agents that are "substantially uniformly distributed" throughout a dough composition means that the amount of chemical leavening agent included in the dough composition is sufficiently well distributed throughout the dough composition that the dough composition can be stored and baked to exhibit commercially useful uniformity, baked specific volume, color, and flavor properties, for a chemically leavened dough product.

The terms "high speed" and "high shear" are used in a manner consistent with the terms' understood meanings to, and refer to mixing methods that will result in more than 15 percent of the encapsulated particles being damaged upon being mixed and uniformly distributed in the dough composition. "High speed" mixing generally refers to the use of standard bowl-type mixer with reciprocating, rotating, orbital, or spinning "beaters" or other mechanically impinging utensils that reciprocate or rotate at speeds equal to or in excess of 72 revolutions per minute (rpm).

Low shear mixing steps are steps understood in the baking and mixing arts to be of a low shear, and according to the invention are mixing steps that result in damage to less than 15 percent of encapsulated particles, more preferably less than 10 percent, or less than 5 percent or less than 3 percent of the total encapsulated particles, when uniformly distributed in a dough composition. Generally, low speed and low shear mixing steps are used to wet out dry ingredients, to combine ingredients without causing splash or dust formation, or both. Examples of low shear mixing steps include mixing steps in a bowl mixer at speeds below 36 rpm and for a time that causes damage to not more than 15 percent of encapsulated particles, e.g., for less than about 300 seconds. Other examples of low shear mixing steps include sheeting, folding, lapping, kneading, enrobing, and rolling steps, which can cause damage to very low amounts of encapsulated particles, e.g., less than 5 or 3 percent.

Mixing may be performed in commercially available and well-known equipment, for example a horizontal bar mixer with a cooling jacket (e.g., a 1134 kg (2500 lb.) horizontal bar mixer from Oshikiri in Japan). The dough ingredients can be added separately or in combinations, and can be mixed at one or more speeds, sometimes in stages, until a proper consistency is achieved and all ingredients are substantially uniformly dispersed in a dough composition. A total of from about 5 minutes to about 45 minutes high and/or low speed mixing time can be typical to produce a uniform dough composition, optionally by adding ingredients or combinations of ingredients sequentially over two or more mixing stages.

Typical methods of preparing dough compositions include one or more high speed mixing steps that produce sufficiently high shear for a sufficient length of time to uniformly distribute dough ingredients in a dough composition, within a commercially reasonable period of time. The one or more high speed mixing steps may, for example, be for periods of from 200 to about 400 seconds, and at a speed of from 36 to about 72 rpm.

In certain preferred embodiments of the invention, two mixing stages can be used to combine dough ingredients into a dough composition. A first stage can be used, e.g., to hydrate flour and initiate development of the dough (i.e., gluten development). A second stage can be used for incorporation of minor ingredients and to allow further development. The total of the dough ingredients can be added in the different stages with different amounts of mixing and at one or more different mixing speeds, to provide a uniform distribution of the ingredients in a dough composition. In these or other embodiments, encapsulated basic chemical leavening agent particles can be added to limit shear damage, while still providing uniform distribution, preferably in a second mixing stage, and preferably during only a portion of a high speed mixing step of the second stage (i.e., during a portion of the final high speed mixing step).

In one specific embodiment, which can be used especially to prepare a stable, interior dough composition, a first mixing stage can combine dry ingredients and shortening. In a preferred method, dry ingredients such as one or more types of flour can be first combined with water and ice in an iced mixing bowl. Shortening can be melted or softened, and then added to the dry ingredients. The mixture can be mixed at slow speed, e.g., from about 25 to about 35 rpm, for a desired amount of time, e.g., less than a minute. Then the mixture can be mixed at high speed, e.g., from about 65 to about 75 rpm, for a longer period of time, e.g., less than five minutes or less than four minutes. In a second mixing stage, fines can be added such as sugar, salt, non-encapsulated acidic chemical leavening agent, as well as additional shortening in the form of shortening chips, and other optional ingredients. The total first and second stage ingredients can be mixed at slow speed, e.g., from about 25 to about 35 rpm, for a relatively short time, e.g., less than a minute, and then mixed at high speed, e.g., from about 65 to about 75 rpm, for a longer time, e.g., less than five minutes.

In this exemplary two-stage embodiment, encapsulated basic chemical leavening agents can be added to the other dough ingredients in a way that limits damage to the encapsulated basic chemical leavening agent particles. For example, the encapsulated basic chemical leavening agent particles may be added after some portion of the second stage high speed mixing step has been completed, so that the encapsulated basic chemical leavening agent particles are mixed at high speed for only a portion of the total high speed mixing period. This reduced amount of high speed mixing will reduce the amount of damaging shear to which the encapsulated basic chemical leavening agent particles are exposed, and still substantially uniformly distributes the encapsulated particles into the dough composition. Specifically, after a portion of the second stage high speed mixing period has been completed, e.g., about half of the total intended high speed mix period (e.g., 1.5 to 2.5 minutes), the encapsulate basic chemical leavening agent particles can be added. Optionally, the mixing speed can be slowed to slow speed for a period sufficient to gradually add the encapsulated particles. Then the mixing speed can be increased again to high speed for a time sufficient to uniformly incorporate the encapsulated basic chemical leavening agent particles into the other ingredients. But the period of high speed mixing should exposes the encapsulated basic chemical leavening agent particles to less damage than would the full high speed mixing period, preferably a time that does not result in damage to more than 15 percent of the encapsulated basic chemical leavening agent particles.

Optionally, a dough composition may be prepared by incorporating the non-encapsulated acidic chemical leavening agent into softened or melted shortening (fat), and then combining the shortening and non-encapsulated chemical leavening agent with other ingredients in the mixer. Mixing the non-encapsulated acidic agent can be done by any desired high or low speed mixing method. This technique can also stabilize the resulting dough composition by covering the non-encapsulated acidic agent with a hydrophobic layer that prevents hydration and dissolution of the chemical leavening agent until re-melting of the fat.

By another method, encapsulated basic chemical leavening agent particles can be incorporated into other dough ingredients following the mixing step or steps, using one or more of a low shear steps such as sheeting, rolling, lapping, folding, or enrobing. Specifically, as an alternative or in addition to adding one or more encapsulated basic chemical leavening agent particles during mixing, as described above, one or more encapsulated basic chemical leavening agent particles can be incorporated into a dough composition by one or more low shear steps of sheeting, rolling, lapping, folding, or enrobing. According to these techniques, encapsulated basic leavening agent can be applied and preferably uniformly distributed over a surface of the dough composition prior to or during a low shear processing step, e.g., by adding encapsulated basic chemical leavening agent particles at the beginning of or between one or more of the low shear steps. A dough composition can be sheeted, folded, enrobed, or lapped, multiple times, in a manner and sufficiently to distribute the encapsulated basic chemical leavening agent particles substantially uniformly throughout the finally processed dough composition.

A dough composition can be further processed as desired to prepare a final dough composition. Depending on the type of final dough composition certain steps of sheeting, folding, lapping, enrobing, or cutting and shaping, can be used to form a particular shape and form of dough composition product

The inventive methods and compositions can be used to prepare any type of dough compositions, and can be particularly useful for refrigerated dough compositions useful for preparing baked dough compositions including biscuits, bread sticks, crescent rolls, sweet rolls, etc.

The dough composition can be packaged and sold in a form that is refrigerator stable. An example of a packaging configuration is a non-pressurized, substantially air-tight plastic tube or pouch containing individual portions of a dough composition such as biscuits. Any materials and techniques can be used for the packaging. Typical such biscuit products are often packaged and sold in pressurized containers such as cardboard cans. The inventive dough has the advantage of being capable of being packaged without taking special measures to pressurize the packaging.

Exemplary packaging that may be useful is non-pressurized pouch packaging. The container can preferably be a plastic that acts as an adequate oxygen barrier, to promote storage and freshness. Also, purging the product and packaging to remove oxygen, for example using a purge of nitrogen gas, can preferably be used to control graying

Certain embodiments of the dough product may be packaged to include a carbon dioxide scavenger, e.g., as described in Assignee's United States patent application serial number 10/273,668, filed October 16, 2002, and entitled "Dough Composition Packaged in Flexible Packaging with Carbon Dioxide Scavenger." According to such embodiments, carbon dioxide scavenger can be included in a packaged (unproofed) dough product. The scavenger can reduce or prevent bulging of flexible packaging otherwise caused by carbon dioxide evolution, by absorbing amounts of carbon dioxide released by the dough composition during storage. The scavenger may be included in the packaged dough product in the form of a separate component such as a patch or sachet placed inside the package, or in the form of a scavenger material being included on or within a layer of a packaging material. As an example of the latter, a scavenger can be included as a filler or a suspended material in a polymeric matrix that is a part of a flexible packaging material of the packaged dough product. As another example, scavenger can be placed at an interior surface of a flexible packaging material, such as in the form of a coating that consists of or contains the scavenger.

Useful scavengers can include metal oxides and metal hydroxides. A metal oxide can react with water to produce a metal hydroxide. The metal hydroxide can react with carbon dioxide to form water and a metal carbonate that will not cause flexible packaging to bulge. Example of scavengers may include calcium oxide or calcium hydroxide, magnesium oxide, barium oxide, potassium oxide ($K_2O$), and sodium oxide ($Na_2O$), etc.

The dough composition can preferably be packaged in a low pressure container, meaning that the packaging is substantially air tight and will bulge if a gas such as carbon dioxide builds inside the packaging, but is not otherwise designed to produce or maintain a pressurized (greater than 1 atm) interior space. The packaging material does not require and can preferably not include a pressure relief valve.

The packaging can preferably be flexible. A substantially air tight flexible packaging can be prepared from materials such as paper or polymeric materials, such as polymeric (e.g., plastic) film. A polymeric film may be prepared from generally well known packaging material polymers such as different polyesters (e.g., PET), nylons, polyolefins (e.g., polyethylene), vinyls, polyalcohols, etc. A flexible packaging film may include only one or multiple layers, including two or more different layers that perform different functions including layers that act as a support layer, an oxygen barrier layer, a scavenger layer (polymer that includes scavenger), or a sealant layer.

A particular embodiment of packaged dough product according to the invention can involve a packaged dough product that contains sub-divided packages containing one or multiple portions of dough composition packaged separately to include carbon dioxide scavenger, wherein the sub-packages are themselves contained together within a larger package to make up the packaged dough product. The smaller packaged dough products use low pressure (non-pressurized) packaging as described herein, which can make it easier (e.g., as opposed to pressurized cans often used with refrigerated dough products) to package fewer portions of dough composition, e.g., biscuits, in a single package, which in turn allows the advantage of portion control, i.e., less than all portions contained in a packaged dough product may be used together upon opening the packaged dough product.

As an example, a packaged dough product may include one or multiple portions of dough compositions packaged in a number of sub-divided units, e.g., a single packaged dough product may contain multiple smaller packages of 1, 2, or 3 portions of dough composition (e.g., biscuits), with each smaller package being substantially air tight but still not pressurized. The smaller packaged dough product may contain 1, 2, 3, or any other number of dough portions such as a biscuit, convenient for a consumer to use at one time. This number of dough composition portions can be packaged with flexible packaging and according to the invention to include a carbon dioxide scavenger within the package to reduce or prevent bulging of the individual 1 or 2 or 3 portion package. More than one of the smaller packaged units containing 1 or multiple dough composition portions can be included in a larger, non-pressurized package.

Preferred embodiments of the invention are described herein. Variations on the preferred embodiments will become apparent to those of skill in the relevant arts upon reading this description.

### EXAMPLES

Leaching Test Procedure for Testing Release of Encapsulated Base

1. Determine percentage of base (e.g., sodium bicarbonate).
2. Set a Burrell shaker at a dial setting to give a frequency of 300 per minute (60 cycles per second).
3. Accurately weigh to +/- 0.0001 gram, approximately 2.5 grams of sample into a 250 ml screw-top Erlenmeyer flask. Record exact weights.
4. Add 150 ml (+/- 1ml) of 1:1 by volume propylene glycol:water solution to sample. Start shaking.
5. Agitate flask for 60 minutes.
6. At the end of 60 minutes, remove flask from shaker (without stopping shaker). Immediately filter the contents of the flask through a 325 mesh screen which has been pre-moistened with approximately 10 ml of 1:1 propylene glycol/water, into a dry 400 ml Griffin beaker. (Fit the funnel with a circular piece of 325 mesh stainless steel screen folded like filter paper and rinse with a 10 ml solution of 50/50 propylene glycol/water.)
7. Rinse the flask with approximately 10 ml portions of propylene glycol/water solution added from a wash bottle. Rinse the flask three times to complete transfer. The third rinse should include rinsing the stopper. Add each washing to the titration beaker.
8. Insert electrode of properly standardized pH meter into filtered solution. While stirring on a magnetic stirrer, titrate with 0.1N HCl to a pH endpoint of 4.6. Record exact mls of titrant.

Calculation:

$$\text{Percent base (for sodium bicarbonate) released} =$$

$$(\text{ML} \times 0.1 \times 8.401) / (\text{W} \times \%\text{NaHCO}_3/100)$$

Where

ML = ml titrant

W = sample weight in grams

%NaHCO$_3$ is determined by determining the percentage of fat/oil of the material; the balance is NaHCO$_3$.

**Example 1 - High pH Veneer Dough:** Applied a relatively higher pH veneer exterior dough (made with free soda or poorly encapsulated soda) to a relatively low pH interior dough (made with tightly encapsulated soda) to enhance biscuit browning upon baking.

Dough Formula & Process

Formula 1 = e-soda veneer dough (made with 50% active e-soda)
**Formula/Process & Application of**
**E-soda Veneer Dough**

Batch size: 2000

**1st Stage**

| Ingredient | | % | gm |
|---|---|---|---|
| Flour | | 38.97 | 779.4 |
| Flour | | 8.8 | 176 |
| water (add enzymes) | | 17.615 | 352.3 |
| Ice | | 9.075 | 181.5 |
| shortening | | 6.21 | 124.2 |
| xanthan gum | | 0.13 | 2.6 |

**2nd Stage**

| E-soda | 50% active | 3.34 | 66.8 |
|---|---|---|---|
| shortening chips | | 7.49 | 149.8 |
| Sugar | | 5.42 | 108.4 |
| SALP | | 1.67 | 33.4 |
| Salt | | 1.28 | 25.6 |
| TOTAL | | 100 | 2000 |

**Spiral Mixer Process**

**First Stage Mix**

1) Soften/melt shortening
2) Combine first stage dry ingredients in an iced mixing bowl
3) Add melted shortening.
4) Mix slow for 30 seconds.
5) Mix high for 180 seconds.

**Second Stage Mix**

6) Cut-in second stage fines and added shortening chips (excluding e-soda).
7) Mix slow for 30 seconds.
8) Mix high for lows seconds.

**Third Stage Mix**

9) Cut in e-soda.
10) Mix slow 30 seconds.
11) Mix high 105 seconds.

**Sheeting 1**

12) Sheet 1K dough pad to 5 mm. Start at 45 mm and reduce gap width by 5 mm increments. 3 fold and turn 90° then sheet to 4 mm (make two 1K dough pads - cover with plastic to prevent dehydration).

**Lamination**

13) Place 3000 gm dough pad sheeted to 8 mm (use control interior dough) on top of 1K dough pad sheeted to 5 mm.
14) Three fold and turn 90°.
15) Sheet combined 4K dough pad to 13 mm. Start at 45 mm and reduce gap width by 5 mm increments to 15 mm, then make final pass at 13 mm - two passes per gap setting with 4 passes at final gap setting.

**Cutting/packaging**

16) Hex cut biscuits to 63 gm +/- 3 gm.
17) Package two 63 gm biscuits per pouch (14 pouches per dough 4K dough pad)
18) Flush pouch with 100% N2 gas.

Storage

19) Store product at 7.2°C (45°F)

Formula 2 = Free soda veneer dough

**Formula/Process & Application of Free Soda Veneer Dough**

Batch size: 3000

**1st Stage**

| Ingredient | | % | gm |
|---|---|---|---|
| Flour | | 38.97 | 1169.1 |
| Flour | | 8.8 | 264 |
| water (add enzymes) | | 17.615 | 528.45 |
| Ice | | 9.075 | 272.25 |
| shortening | | 7.88 | 236.4 |
| xanthan gum | | 0.13 | 3.9 |

**2nd Stage**

| sodium bicarbonate | | 1.67 | 50.1 |
|---|---|---|---|
| shortening chips | | 7.49 | 224.7 |
| sugar | | 5.42 | 162.6 |
| SALP | | 1.67 | 50.1 |
| Salt | | 1.28 | 38.4 |
| **TOTAL** | | 100 | 3000 |

**Spiral Mixer Process**

**First Stage Mix**

1) Soften/melt shortening
2) Combine first stage dry ingredients in an iced mixing bowl
3) Add melted shortening.
4) Mix slow for 30 seconds.
5) Mix high for 180 seconds.

**Second Stage Mix**

6) Cut-in second stage fines and added shortening chips (excluding e-soda).
7) Mix slow for 30 seconds.
8) Mix high for 105 seconds.

**Third Stage Mix**

9) Cut in e-soda
10) Mix slow 30 seconds.
11) Mix high 105 seconds.

**Sheeting 1**

12) Sheet 1K dough pad to 5 mm. Start at 45 mm and reduce gap width by 5 mm increments. 3 fold and turn 90° then sheet to 4 mm (make two 1K dough pads - cover with plastic to prevent dehydration).

**Lamination**

13) Place 3000 gm dough pad sheeted to 8 mm (use control interior dough) on top of 1K dough pad sheeted to 5 mm.
14) Three fold and turn 90°.
15) Sheet combined 4K dough pad to 13 mm. Start at 45 mm and reduce gap width by 5 mm increments to 15 mm, then make final pass at 13 mm - two passes per gap setting with 4 passes at final gap setting.

**Cutting/packaging**

16) Hex cut biscuits to 63 gm +/- 3 gm.
17) Package two 63 gm biscuits per pouch (14 pouches per dough 4K dough pad)
18) Flush pouch with 100% N2 gas.

(Repeat steps 13-18 for second 3 000 gm dough pad made with CD 70 e-soda - dough 3)

**Storage**

19) Store product at 7.2°C (45°F)

Formula 3 = Control dough and Interior dough formula (made with 70% active e-soda)

**Control and Interior Dough Formula/Process**

Batch size gm: 5000

**1st Stage**

| Ingredient | | % | gm |
|---|---|---|---|
| Flour | | 38.97 | 1948.5 |
| Flour | | 8.8 | 440 |
| Water (add enzymes) | | 17.615 | 880.75 |
| Ice | | 9.075 | 453.75 |
| shortening | | 7.16 | 358 |
| xanthan gum | | 0.13 | 6.5 |

**2nd Stage**

| | | | |
|---|---|---|---|
| E-soda | 70% active | 2.39 | 119.5 |
| shortening chips | | 7.49 | 374.5 |

(continued)

| | | | |
|---|---|---|---|
| Sugar | | 5.42 | 271 |
| SALP | | 1.67 | 83.5 |
| Salt | | 128 | 64 |
| **TOTAL** | | 100 | 5000 |

**Spiral Mixer Process**

**First Stage Mix**

1) Soften/melt shortening
2) Combine first stage dry ingredients in an iced mixing bowl
3) Add melted shortening.
4) Mix slow for 30 seconds.
5) Mix high for 180 seconds.

**Second Stage Mix**

6) Cut-in second stage fines and added shortening chips (excluding e-soda).
7) Mix slow for 30 seconds.
8) Mix high for 105 seconds.

**Third Stage Mix**

9) Cut in e-sodm
10) Mix slow 30 seconds.
11) Mix high 105 seconds.

**Sheeting: 3 per batch**

12) Sheet dough pad to 13 mm. Start at 45 mm and reduce gap width by 5 mm increments to 15 mm, then make final pass at 13 mm - two passes per gap setting.
13) Rotate dough 90° and sheet to 13 mm. Start at 45 mm and reduce gap width by 5 mm increments to 15 mm, then make final pass at 13 mm - two passes per gap setting with 4 passes at final gap setting.

**Cutting/packaging** (control biscuits)

14) Hex cut biscuits to 63 gm +/- 3 gm.
15) Package two 63 gm biscuits per pouch
16) Flush pouch with 100% N2 gas.

**Storage**

17) Store product at 7.2°C (45°F)

Note, made two additional 3000 gm batches of control/interior dough and sheeted to 8 mm and used as described in lamination steps 13 in Formula/Process & Application of E-soda Veneer Dough and Formula/Process & Application of Free Soda Veneer Dough (above).

The 50% active e-soda in formula 1 has a leach rate = 75%.

The 70% active e-soda in formula 2 has a leach rate = 3%.

Product Evaluation: The control (no veneer) and two veneer products (leaky e-soda and free soda) were baked within the first week of production and Minolta L values were recorded.

L vales ≤ 71 appear acceptably brown.

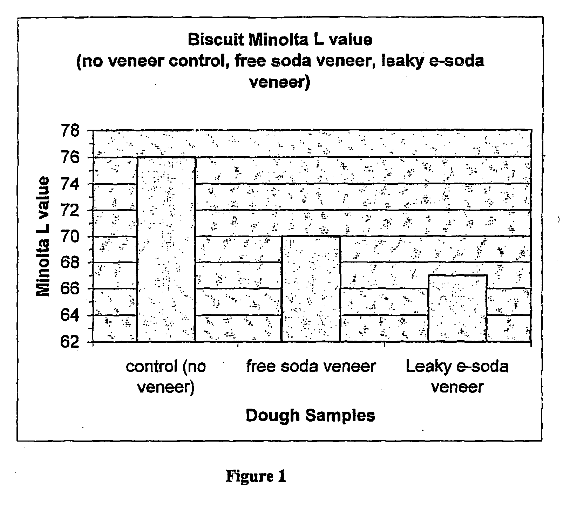

Figure 1 shows that the control biscuit color was pale (L>71) while both veneer biscuit crust L values were < 71 and appeared acceptably brown.

**Example 2 - Topical Application of e-soda to Dough Surface:** Topically applied a dusting of e-soda to the exterior surface of the biscuit dough to enhance biscuit surface pH and browning upon baking.

Dough Formula & Process = formula 3

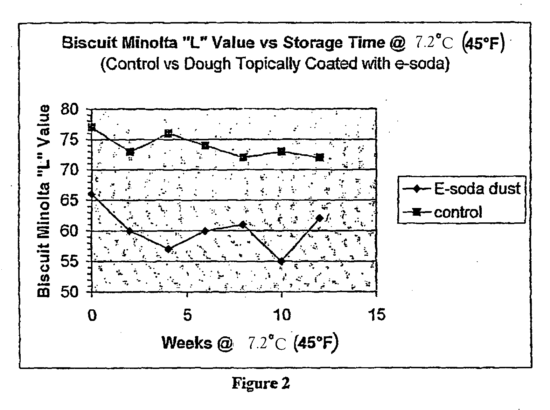

Topical application of e-soda to dough surface: Placed biscuit pucks into a plastic bag containing the 50% active e-soda with a 75% leach rate and shook the bag to cover the biscuit dough. Transferred approximately 0.8 gm e-soda to the surface of each 63 gm biscuit puck. The results are shown at Figures 2, 3.

Figure 2 shows that biscuits topically coated in e-soda (50% active with 75% leach rate) browned to a greater extent compared to un-coated control samples that were pale in appearance (L>71).

**Claims**

1.  A refrigerator stable, unproofed chemically leavened dough composition that leavens during baking by action of chemical leavening agents comprising an interior dough comprising encapsulated basic chemical leavening agent and non-encapsulated acidic chemical leavening agent, wherein the interior dough has a pH below 6.5 during refrigerated storage and does not brown normally during baking if the interior dough is at an exterior surface of the dough composition, and
    wherein an exterior surface of the dough composition having a pH between 6.5 and 7.5 browns normally during baking.

2.  The composition of claim 1 wherein the interior dough has a pH below 6.5 after 5 minutes inside a 176.7°C (350F) oven.

3.  The composition of claim 1 wherein the encapsulated basic chemical leavening agent comprises soda bicarbonate encapsulated in vegetable oiL

4.  The composition of claim 1 wherein the interior dough exhibits a carbon dioxide evolution of less than 50 cc carbon dioxide per 125 grams of dough, over 10 weeks at 7.2°C (45°F).

5.  The composition of claim 1 wherein the non-encapsulated acidic chemical leavening agent is selected from the group consisting of sodium aluminum phosphate, sodium aluminum sulfate, sodium acid pyrophosphate, monosodium phosphate, monocalcium phosphate monohydrate, anhydrous monocalcium phosphate, dicalcium phosphate dehydrate, and mixtures thereof.

6.  The composition of claim 5 wherein the non-encapsulated acidic chemical leavening agent comprises sodium aluminum phosphate.

7.  The composition of claim 1 wherein the dough composition comprises at a dough surface, encapsulated basic chemical leavening agent that reacts during refrigerated storage or during an early stage of baking with dissolved acidic chemical leavening agent such that the dough surface has a pH during baking that causes the dough surface to brown.

8.  The composition of claim 1 wherein the dough composition evolves less than 60 cubic centimeters of carbon dioxide per 125 grams of dough over 8 weeks while stored at 7.2°C (45 degrees Fahrenheit).

9. The composition of claim 1 packaged in low pressure packaging.

10. The composition of claim 9 wherein the chemical leavening agents do not react sufficiently during 8 weeks of storage at 7.2°C (45 degrees Fahrenheit) to substantially expand the packaging.

11. A refrigerator stable, unproofed chemically leavened dough composition that leavens during baking by action of chemical leavening agents comprising an interior dough comprising encapsulated basic chemical leavening agent and non-encapsulated acidic chemical leavening agent, wherein
the interior dough has a pH below 6.5 during refrigerated storage and exhibits a pH during baking that prevents the interior dough from browning normally during baking if the interior dough were at an exterior surface of the dough composition,
the interior dough exhibits a carbon dioxide evolution of less than 40 cc carbon dioxide per 125 grams over 8 weeks at 7.2°C (45°F), and an exterior surface of the dough having a pH between 6.5 and 7.5 browns normally during baking.

12. The composition of claim 11 wherein the dough composition comprises
an interior dough composition comprising a chemical leavening system to provide reduced carbon dioxide evolution, and
an exterior dough composition comprising a chemical leavening system to provide browning during baking.

13. The composition of claim 12 wherein the exterior dough composition is a veneer.

14. A methods of preparing a refrigerator stable, unproofed, chemically leavened dough composition that leavens during baking by action of chemical leavening agents comprising interior dough and an exterior dough surface, the method comprising
providing an interior dough comprising encapsulated basic chemical leavening agent and non-encapsulated acidic Chemical leavening, agent, wherein the interior dough has a pH below 6.5 during refrigerated storage and would not brown normally during baking if at a dough surface, and
providing an exterior dough surface having a pH between 6.5 and 7.5 that browns normally during baking.

15. The method of claim 14 comprising
providing an interior dough composition,
providing an exterior dough composition, and
folding the exterior dough composition around the interior dough composition.

16. The method of claim 14 comprising
providing interior dough comprising encapsulated basic chemical leavening agent and non-encapsulated acidic chemical leavening agent, and
topically applying basic material to a surface of the interior dough to produce a dough surface that exhibits normal browning during baking.

17. The method of claim 16 wherein the topically applied basic material reacts during refrigerated storage or during an early stage of baking with dissolved acidic chemical leavening agent to cause the dough surface to acquire a pH that results in browning during baking.

18. The method of claim 16 wherein the topically applied basic material comprises basic chemical leavening agent.

19. The method of claim 16 wherein the topically applied basic material comprises encapsulated basic chemical leavening agent.

**Patentansprüche**

1. Kühlschrankstabile, nicht gegangene, chemisch getriebene Teigzusammensetzung, die während des Backens durch die Wirkung chemischer Treibmittel getrieben wird, umfassend einen inneren Teig, der verkapseltes, basisches chemisches Treibmittel und nichtverkapseltes, saures chemisches Treibmittel umfasst, wobei der innere Teig während der gekühlten Lagerung einen pH-Wert unterhalb von 6,5 aufweist und während des Backens gewöhnlich nicht bräunt, wenn sich der innere Teig an einer äußeren Oberfläche der Teigzusammensetzung befindet, und wobei eine äußere Oberfläche der Teigzusammensetzung mit einem pH-Wert zwischen 6,5 und 7,5 gewöhnlich während des Backens bräunt.

2. Zusammensetzung gemäß Anspruch 1, wobei der innere Teig nach 5 Minuten in einem Ofen mit 176,7 °C (350 °F) einen pH-Wert unterhalb von 6,5 aufweist.

3. Zusammensetzung gemäß Anspruch 1, wobei das verkapselte, basische chemische Treibmittel in Pflanzenöl verkapseltes Natriumbicarbonat umfasst.

4. Zusammensetzung gemäß Anspruch 1, wobei der innere Teig eine Kohlendioxid-Entwicklung von weniger als 50 cc Kohlendioxid pro 125 Gramm Teig während 10 Wochen bei 7,2 °C (45°F) aufweist.

5. Zusammensetzung gemäß Anspruch 1, wobei das nichtverkapselte, saure chemische Treibmittel ausgewählt ist aus der Gruppe, bestehend aus Natriumaluminiumphosphat, Natriumaluminiumsulfat, natriumsaures Pyrophosphat, Mononatriumphosphat, Monocalciumphosphatmonohydrat, wasserfreiem Monocalciumphosphat, Dicalciumphosphatdihydrat und Gemischen davon.

6. Zusammensetzung gemäß Anspruch 5, wobei das nichtverkapselte, saure chemische Treibmittel Natriumaluminiumphosphat umfasst.

7. Zusammensetzung gemäß Anspruch 1, wobei die Teigzusammensetzung an einer Teigoberfläche verkapseltes, basisches chemisches Treibmittel umfasst, das sich während der gekühlten Lagerung oder während eines frühen Stadiums des Backens mit gelöstem, saurem chemischem Treibmittel umsetzt, so dass die Teigoberfläche während des Backens einen pH-Wert aufweist, der Bräunen der Teigoberfläche bewirkt.

8. Zusammensetzung gemäß Anspruch 1, wobei die Teigzusammensetzung während 8 Wochen Lagerung bei 7,2 °C (45 °F) weniger als 60 Kubikzentimeter Kohlendioxid pro 125 Gramm Teig entwickelt.

9. Zusammensetzung gemäß Anspruch 1, die in einer Unterdruckverpackung verpackt ist.

10. Zusammensetzung gemäß Anspruch 9, wobei sich die chemischen Treibmittel während 8 Wochen Lagerung bei 7,2 °C (45 °F) nicht genügend umsetzen, um die Verpackung wesentlich auszudehnen.

11. Kühlschrankstabile, nicht gegangene, chemisch getriebene Teigzusammensetzung, die während des Backens durch die Wirkung chemischer Treibmittel getrieben wird, umfassend einen inneren Teig, der verkapseltes, basisches chemisches Treibmittel und nichtverkapseltes, saures chemisches Treibmittel umfasst, wobei der innere Teig während der gekühlten Lagerung einen pH-Wert unterhalb von 6,5 aufweist und während des Backens einen pH-Wert aufweist, der gewöhnlich Bräunen des inneren Teigs verhindert, wenn sich der innere Teig an einer äußeren Oberfläche der Teigzusammensetzung befinden würde,
wobei der innere Teig eine Kohlendioxid-Entwicklung von weniger als 40 cc Kohlendioxid pro 125 Gramm Teig während 8 Wochen bei 7,2 °C (45 °F) aufweist, und
eine äußere Oberfläche des Teigs mit einem pH-Wert zwischen 6,5 und 7,5 gewöhnlich während des Backens bräunt.

12. Zusammensetzung gemäß Anspruch 11, wobei die Teigzusammensetzung folgendes umfasst:

eine innere Teigzusammensetzung, umfassend ein chemisches Treibmittelsystem zur Bereitstellung einer verringerten Kohlendioxidentwicklung, und
eine äußere Teigzusammensetzung, umfassend ein chemisches Treibmittelsystem, zur Bereitstellung von Bräunen während des Backens.

13. Zusammensetzung gemäß Anspruch 12, wobei die äußere Teigzusammensetzung ein Überzug ist.

14. Verfahren zum Herstellen einer kühlschrankstabilen, nicht gegangenen, chemisch getriebenen Teigzusammensetzung, die während des Backens durch die Wirkung chemischer Treibmittel getrieben wird, umfassend inneren Teig und eine äußere Teigoberfläche, wobei das Verfahren folgendes umfasst:

Bereitstellen eines inneren Teigs, umfassend verkapseltes, basisches chemisches Treibmittel und nichtverkapseltes, saures chemisches Treibmittel, wobei der innere Teig während der gekühlten Lagerung einen pH-Wert unterhalb von 6,5 aufweist und gewöhnlich während des Backens nicht bräunen würde, wenn er an einer Teigoberfläche liegen würde, und
Bereitstellen einer äußeren Teigoberfläche mit einem pH-Wert zwischen 6,5 und 7,5, die gewöhnlich während des Backens bräunt.

**15.** Verfahren gemäß Anspruch 14, umfassend
Bereitstellen einer inneren Teigzusammensetzung,
Bereitstellen einer äußeren Teigzusammensetzung, und
Wickeln der äußeren Teigzusammensetzung um die innere Teigzusammensetzung.

**16.** Verfahren gemäß Anspruch 14, umfassend
Bereitstellen von innerem Teig, umfassend verkapseltes, basisches chemisches Treibmittel und nichtverkapseltes, saures chemisches Treibmittel, und
topisches Auftragen von basischem Material auf eine Oberfläche des inneren Teigs, um eine Teigoberfläche herzustellen, die normales Bräunen während des Backens zeigt.

**17.** Verfahren gemäß Anspruch 16, wobei sich das topisch aufgetragene, basische Material während der gekühlten Lagerung oder während eines frühen Stadiums des Backens mit gelöstem, saurem chemischem Treibmittel umsetzt, um zu bewirken, dass die Teigoberfläche einen pH-Wert annimmt, der zum Bräunen während des Backens führt.

**18.** Verfahren gemäß Anspruch 16, wobei das topisch aufgetragene, basische Material basisches chemisches Treibmittel umfasst.

**19.** Verfahren gemäß Anspruch 16, wobei das topisch aufgetragene, basische Material verkapseltes, basisches chemisches Treibmittel umfasst.

**Revendications**

**1.** Composition de pâte à levée chimique, non fermentée et stable à la réfrigération, qui lève lors de la cuisson par action d'agents levants chimiques, comprenant une pâte intérieure comprenant un agent levant chimique basique encapsulé et un agent levant chimique acide non encapsulé, où la pâte intérieure possède un pH inférieur à 6,5 pendant le stockage réfrigéré et ne brunit pas normalement lors de la cuisson si la pâte intérieure se trouve au niveau d'une surface extérieure de la composition de pâte, et dans laquelle une surface extérieure de la composition de pâte ayant un pH compris entre 6,5 et 7,5 brunit normalement lors de la cuisson.

**2.** Composition selon la revendication 1, dans laquelle la pâte intérieure possède un pH inférieur à 6,5 après 5 minutes à l'intérieur d'un four à 176, 7 °C (350°F).

**3.** Composition selon la revendication 1, dans laquelle l'agent levant chimique basique encapsulé comprend du bicarbonate de soude encapsulé dans de l'huile végétale.

**4.** Composition selon la revendication 1, dans laquelle la pâte intérieure présente un dégagement de dioxyde de carbone inférieur à 50 cm$^3$ de dioxyde de carbone pour 125 grammes de pâte, sur une période de 10 semaines à 7,2°C (45°F).

**5.** Composition selon la revendication 1, dans laquelle l'agent levant chimique acide non encapsulé est choisi parmi le groupe constitué par le phosphate de sodium et d'aluminium, le sulfate de sodium et d'aluminium, le pyrophosphate acide de sodium, le phosphate monosodique, le phosphate monocalcique monohydraté, le phosphate monocalcique anhydre, le phosphate dicalcique dihydraté, et des mélanges de ceux-ci.

**6.** Composition selon la revendication 5, dans laquelle l'agent levant chimique acide non encapsulé comprend du phosphate de sodium et d'aluminium.

**7.** Composition selon la revendication 1, dans laquelle la composition de pâte comprend au niveau d'une surface de pâte, un agent levant chimique basique encapsulé qui réagit pendant le stockage réfrigéré ou pendant un stade de début de cuisson avec un agent levant chimique acide dissous, de sorte que la surface de pâte possède un pH lors de la cuisson qui provoque le brunissement de la surface de la pâte.

8. Composition selon la revendication 1, dans laquelle la composition de pâte dégage moins de 60 centimètres cubes de dioxyde de carbone pour 125 grammes de pâte, sur une période de 8 semaines lors d'un stockage à 7,2°C (45°F).

9. Composition selon la revendication 1, conditionnée dans un emballage basse pression.

10. Composition selon la revendication 9, dans laquelle les agents levants chimiques ne réagissent pas assez pendant les 8 semaines de stockage à 7,2°C (45°F) pour sensiblement dilater l'emballage.

11. Composition de pâte à levée chimique, non fermentée et stable à la réfrigération, qui lève lors de la cuisson par action d'agents levants chimiques, comprenant une pâte intérieure comprenant un agent levant chimique basique encapsulé et un agent levant chimique acide non encapsulé, où
la pâte intérieure possède un pH inférieur à 6,5 pendant le stockage réfrigéré et présente un pH lors de la cuisson qui empêche le brunissement normal de la pâte intérieure lors de la cuisson si la pâte intérieure se trouvait au niveau d'une surface extérieure de la composition de pâte,
la pâte intérieure présentant un dégagement de dioxyde de carbone inférieur à 40 cm$^3$ de dioxyde de carbone pour 125 grammes sur une période de 8 semaines à 7,2°C (45°F), et
une surface extérieure de la pâte ayant un pH compris entre 6,5 et 7,5 brunissant normalement lors de la cuisson.

12. Composition selon la revendication 11, dans laquelle la composition de pâte comprend
une composition de pâte intérieure comprenant un système de levée chimique destiné à fournir un dégagement de dioxyde de carbone réduit, et
une composition de pâte extérieure comprenant un système de levée chimique destiné à fournir un brunissement lors de la cuisson.

13. Composition selon la revendication 12, dans laquelle la composition de pâte extérieure est un vernis.

14. Méthode de préparation d'une composition de pâte à levée chimique, non fermentée et stable à la réfrigération, qui lève lors de la cuisson par action d'agents levants chimiques, comprenant une pâte intérieure et une surface de pâte extérieure, la méthode comprenant
la fourniture d'une pâte intérieure comprenant un agent levant chimique basique encapsulé et un agent levant chimique acide non encapsulé, où la pâte intérieure possède un pH inférieur à 6,5 pendant le stockage réfrigéré et ne brunit pas normalement lors de la cuisson si elle se trouve au niveau d'une surface de pâte, et
la fourniture d'une surface de pâte extérieure ayant un pH compris entre 6,5 et 7,5 qui brunit normalement lors de la cuisson.

15. Méthode selon la revendication 14, comprenant
la fourniture d'une composition de pâte intérieure,
la fourniture d'une composition de pâte extérieure, et
l'enveloppement de la composition de pâte extérieure autour de la composition de pâte intérieure.

16. Méthode selon la revendication 14, comprenant
la fourniture d'une pâte intérieure comprenant un agent levant chimique basique encapsulé et un agent levant chimique acide non encapsulé, et
l'application topique de matériau basique à une surface de la pâte intérieure afin de produire une surface de pâte présentant un brunissement normal lors de la cuisson.

17. Méthode selon la revendication 16, dans laquelle le matériau basique appliqué de manière topique réagit pendant le stockage réfrigéré ou pendant un stade de début de cuisson avec un agent levant chimique acide dissous afin que la surface de la pâte acquiert un pH qui entraîne un brunissement lors de la cuisson.

18. Méthode selon la revendication 16, dans laquelle le matériau basique appliqué de manière topique comprend un agent levant chimique basique.

19. Méthode selon la revendication 16, dans laquelle le matériau basique appliqué de manière topique comprend un agent levant chimique basique encapsulé.

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030049358 A
- US 09945204 B
- US 6261613 B
- US 10224886 B
- US 10273668 B